(19) Europäisches Patentamt
European Patent Office
Office européen des brevets

(11) EP 0 220 902 B1

(12) **EUROPEAN PATENT SPECIFICATION**

(45) Date of publication and mention of the grant of the patent:
**08.04.1998 Bulletin 1998/15**

(51) Int. Cl.$^6$: **A01N 57/20**, A01N 25/30

(21) Application number: **86308108.9**

(22) Date of filing: **20.10.1986**

(54) **Liquid, phytoactive compositions and methods of use**

Flüssige phytoaktive Zusammensetzungen und Verfahren zu ihrer Verwendung

Compositions liquides phytoactives et leur utilisation

(84) Designated Contracting States:
**AT BE CH DE ES FR GB GR IT LI NL SE**

(30) Priority: **21.10.1985 US 789854**

(43) Date of publication of application:
**06.05.1987 Bulletin 1987/19**

(73) Proprietor: **ZENECA INC.**
**Wilmington, Delaware 19897 (US)**

(72) Inventors:
- **Chan, Jimmy Hua-Hin**
**Martinez California 94553 (US)**
- **Burval, Jan**
**San Rafael California 94903 (US)**

(74) Representative:
**Ricks, Michael James et al**
**Intellectual Property Department,**
**ZENECA Agrochemicals,**
**Jealotts Hill Research Station,**
**P.O. Box 3538**
**Bracknell, Berkshire RG42 6YA (GB)**

(56) References cited:
**EP-A- 0 022 666**
**FR-A- 2 390 901**
**GB-A- 2 129 303**
**US-A- 3 799 758**
**US-A- 4 315 765**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.16.1/3.4

## Description

This invention relates to novel, liquid phytotactive compositions comprising phytoactive compounds containing the moiety:

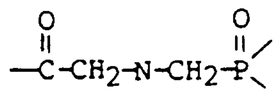

plus certain nonionic surfactants, and to methods of use of such compositions.

The phytoactive compounds containing the moiety set forth above as Formula I are designated herein as N-phosphonomethyl-N-carboxymethyl compounds or "PMCM" compounds. These compounds and the moiety of Formula I will be further defined and illustrated hereinafter. For convenience, the phytoactive compounds containing the moiety of Formula I will hereinafter be designated PMCM compounds.

A large number of phytoactive PMCM compounds are known in the art. The term "phytoactive" as used in describing this invention means effective as a plant growth regulator, as a herbicide, as a defoliant or the like. Illustrative of such PMCM compounds and their use are: U.S. Patent Nos. 3,455,675; 3,556,762; 4,405,531; 3,868,407; 4,140,513; 4,315,765; 4,481,026; and 4,397,676, and International Application WO 84/03607.

Most of these patents also include descriptions of processes employed to prepare such compounds. The following patents provide additional process descriptions: U.S. Patents 3,288,846; 4,507,250, 4,147,719; and 4,487,724.

Certain PMCM compounds, salts of N-phosphonomethylglycine, have been found to be especially effective as post-emergent herbicides. Such salts of N-phosphonomethylglycine, which are particularly effective as herbicidal agents, include the trimethylsulfonium salts of N-phosphonomethylglycine such as are disclosed in U.S. Pat. 4,315,765, the mixed alkylsulfonium salts of N-phosphonomethylglycine such as are disclosed in U.S. Pat. 4,437,874, and the trialkyl salts of N-phosphonomethylglycine which are disclosed in U.S. Pats. 4,384,880 and 4,345,765.

Normally, herbicidal compositions are formulated as dusts, granular compositions, liquid emulsions, or liquid concentrates. The salts of N-phosphonomethylglycine which are used as the active ingredients in herbicides are preferably formulated as liquid concentrates because they are, in fact, water-soluble and hygroscopic which makes them difficult to crystallize and isolate from water solutions. A good liquid concentrate exhibits good compatibility of the various ingredients, good heat and long term storage stability, and miscibility of the active ingredient with the liquid solvent. In addition, it should have minimum eye irration and low levels of inhalation irritation. Not all liquid concentrates containing the salts of N-phosphonomethylglycine as the active ingredient exhibit these properties.

The object of this invention therefore is to provide a phytoactive composition in the form of a liquid concentrate utilizing as the active ingredient, a PMCM compound, preferably an agriculturally acceptable salt of N-phosphonomethylglycine, and an non-ionic surfactant.

The present invention is directed to a liquid phytoactive formulation containing as the active ingredient, an N-phosphonomethyl-N-carboxymethyl compound dissolved or dispersed in a suitable medium, and a liquid nonionic surfactant. The formulation is dilutable by water or water-containing liquid before application in the field.

The formulation of this invention has the advantage that it can contain a high amount of active ingredient, is thermally stable over a wide temperature range, is compatible with and dilutable in both hard and soft water, and is also compatible and dilutable with a nitrogeneous fertilizer solution, and is minimally irritable to the eyes. Also, the formulation of this invention is stable upon aging over months of storage, over a wide temperature range. In addition, the nonionic surfactants are derived from naturally occurring products and are readily broken down by microorganisms.

According to the present invention there is provided a liquid herbicidal concentrate dilutable by water or water-containing liquid before application in the field characterised in that it comprises:

(a) an herbicidally effective N-phosphonomethyl-N-carboxymethyl compound;
(b) one or more liquid nonionic surfactants; which are selected from alkyl polyglycosides;
(c) a solvent for the N-phosphonomethyl-N-carboxymethyl compound; and
(d) one or more inert adjuvants.

The method of the invention comprises applying the above described phytoactive composition to the locus where control is desired. Normally, this would be on the foliage of the weed pests to be eradicated.

Any liquid-dispersible, phytoactive PMCM compound can be used in the compositions and processes in accordance with the invention. The term "liquid-dispersible" is used in a broad sense to encompass compounds which are soluble in a liquid as well as compounds which are merely dispersible. In preferred embodiments, the PMCM compound is liquid-soluble. In the most preferred embodiment, it is water-soluble.

The PMCM may be represented by the formula:

$$R-\overset{O}{\overset{\|}{C}}-CH_2\overset{Z}{\overset{|}{N}}-CH_2\overset{O}{\overset{\|}{P}}-(R)_2$$

wherein R is selected from the group consisting of halogen, -NHOH, -N($R^1$)$_2$, -O$R^2$, -S$R^2$ and -OM, where $R^1$ is independently selected from hydrogen, alkyl or hydroxyalkyl, preferably containing less than about 5 carbon atoms, alkenyl, preferably containing less than about 5 carbon atoms or phenyl moieties; $R^2$ is independently selected from hydrogen, alkyl, hydroxyalkyl or chloroalkyl, preferably containing less than about 5 carbon atoms, alkoxy, preferably containing less than about 5 carbon atoms,
alkylene amine, preferably containing less than about 12 carbon atoms, phenyl or benzyl moieties; and M is selected from hydrogen and agriculturally acceptable saltforming moieties such as alkali metal, alkaline earth metal, stannic, ammonium, organic ammonium, alkyl sulfonium, alkyl sulfoxonium, alkyl phosphonium moieties or combinations thereof; and

Z is hydrogen, an organic moiety or an inorganic moiety.

Representative patents disclosing at least some of such compounds include U.S. Patents 3,799,758, 4,397,676, 4,140,513, 4,315,765, 3,868,407, 4,405,531, 4,481,026, 4,414,158, 4,120,689, 4,472,189, 4,341,549 and 3,948,975.

Representative patents disclosing PMCM compounds wherein Z is other than hydrogen include U.S. Patents 3,888,915, 3,933,946, 4,062,699, 4,119,430, 4,322,239 and 4,084,954.

In preferred PMCM compounds, Z is hydrogen or an organic substituent. Representative organic substituents include methylene carboxylic; methylene phosphonic; methylene cyano; carbonyl, such as formyl, acetyl, benzoyl, perfluoroacyl and thiocarbonyl; ethylene, such as cyano, carbamoyl or carboxy substituted ethyl; and benzene sulfonyl substituents. Representative patents disclosing compounds where the nitrogen contains three organic substituents include U.S. Patents 3,455,675, 3,556,762, 3,853,530, 3,970,695, 3,988,142, 3,991,095, 3,996,040, 4,047,927, 4,180,394, 4,203,756, 4,261,727 and 4,312,662. A preferred tertiary nitrogen substituted PMCM compound is N,N-bis(phosphonmethyl)glycine. Those PMCM compounds wherein Z is hydrogen are most preferred when the phytoactivity desired is herbicidal activity.

Illustrative of agriculturally acceptable salt-forming moieties represented by M, as in OM, are the alkali metals having atomic weights of from 22 through 133, inclusive, such as sodium, potassium, or rubidium; the alkaline earth metals having atomic weights of from 24 through 88 inclusive, such as magnesium or calcium; amonium and aliphatic amonium, wherein the aliphatic ammonium is primary, secondary, tertiary or quaternary and preferably wherein the total number of carbon atoms does not exceed more than about twelve; phenylammonium; trialkylsulfonium, preferably wherein the total number of carbons in the three alkyl substituents does not exceed more than about six, such as trimethylsulfonium, ethyl dimethylsulfonium, propyl dimethylsulfonium and the like; trialkylsulfoxonium, preferably wherein the total number of carbon atoms in the three alkyl substituent does not exceed more than about six, such as trimethylsulfoxonium, ethyl dimethylsulfoxonium, propyl dimethylsulfoxonium and the like; tetraalkylphosphonium, such as tetramethylphosphonium, ethyl trimethylphosphonium, propyl trimethyphosphonium and the like.

It should be noted that the alkaline earth metal salts, while agriculturally acceptable, provide only marginal herbicidal activity.

In preferred compositions according to this invention, M is independently selected from the above-described agriculturally acceptable salt-forming moieties and hydrogen. In are preferred compositions, M is an alkali metal, ammonium, monoalkyl ammonium or trialkylsulfonium moiety. In most preferred compositions only one M is an alkali metal, ammonium, monoalkyl ammonium, or trialkylsulfonium moiety, while the the two M's are hydrogen. Representative most preferred compositions include isopropylamine N-phosphonomethylglycine, trimethylsulfonium N-phosphonomethylglycine and sodium sesqui-N-phosphonomethylglycine. Combinations of two or more PMCM compounds can be employed in the compositions and processes in accordance with the invention.

The liquid nonionic surfactants used as one of the essential components of the herbicidal compositions of the invention, for example, can be any one of the following specific compounds: Al-1685 and Al-2042, sold by ICI; Emcol D-7533 and Witcamide 272 (a modified alkanolmide), sold by Witco Chemical Company; Staley APG 91-3, Staley APG 91-1, Staley APG 23-1, and Staley APG 23-3, all alkyl polyglycosides sold by Staley Corporation; and Crodesta SL-40, a monococoate sold by Croda Inc. A typical APG surfactant has the repeating structural formula

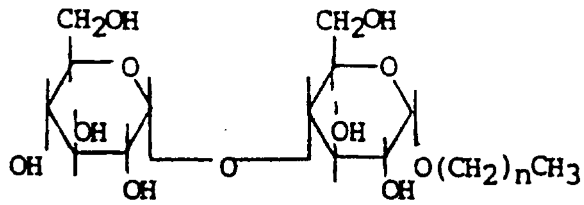

Any two (or more) of the above nonionic surfactants may be mixed in various ratios and used in the herbicidal composition to achieve greater physical surfactant characteristics than each alone. An example is the combination of AL-1685 and APG 91-3 in a 60:40 or 70:30 ratio.

In addition to the foregoing, inert adjuvants can also he incorporated into the compositions of this invention in order to provide for a more satisfactory formulation. Such inert adjuvants include anti-foaming agents, preferably dimethylpolysiloxane, fumed silicas as a thickener, and optionally water.

The weight percentage of the PMCM active ingredient in the liquid concentrates of this invention can range from about 10 to about 70% by weight, preferably from about 30 to about 40% by weight, and most preferably from about 38 to about 42% by weight.

The nonionic surfactants used in the compositions of this invention can range from about 5 to about 40% by weight, preferably from about 15 to about 30% by weight, and most preferably from about 15 to about 25% by weight.

The quantity of inert adjuvant used in the compositions of this invention an range from about 0.5 to about 10% by weight, preferably from about 1 to about 5%, and most preferably from about 1 to about 3% by weight.

Water or other liquid medium makes up the balance of the liquid concentrate. It can range from about 10 to about 70% by weight, preferably from about 20 to about 50% by weight.

The phytoactive compositions of the invention can be prepared by preparing a solution of the PMCM active ingredient and adding thereto the nonionic surfactant, the additives, if any, and as much additional dispersing agent as required. The preferred dispersing agent is water.

The advantages of the use of nonionic surfactant in the process and compositions of this invention are that they are generally inexpensive, readily available, low or non-irritating, often of low toxicity to mammals and generally, lower or non-foaming and since they are derived from naturally produced products are readily broken down by microorganisms.

As previously indicated, mixtures of various non-ionic sufactants, can also be used if desired.

The preferred phytotoxic compositions of this invention have a herbicidal active ingredient.

The following are examples of various formulations of the herbicidal compositions of this invention.

| | Ingredient | % by weight (a.i.**) |
|---|---|---|
| 1. | X-100* (72%) | 57.2 (41.2) |
| | AL-2042 (100%) | 10.3 (10.3) |
| | Staley APG 91-3 (57%) | 18.1 (10.3) |
| | water | 14.4 |
| | | 100.0% |
| 2. | X-100 (56%) | 73.3 (41.2) |
| | AL-2042 (100%) | 20.6 |
| | water | 6.1 |
| | | 100.0% |
| 3. | X-100 (72%) | 57.2 (41.2) |
| | Staley APG 91-3 (57%) | 36.1 (20.6) |
| | water | 6.7 |
| | | 100.0% |

| | | |
|---|---|---|
| 4. | X-100 (72%) | 57.2 (41.2) |
| | AL-1685 (100%) | 10.3 (10.3) |
| | Staley APG 91-3 (57%) | 18.1 (10.3) |
| | water | 14.4 |
| | | 100.0% |

| | | |
|---|---|---|
| 5. | X-100 (57%) | 51.8 (29.5) |
| | Staley APG 91-3 (70%) | 48.2 (33.9) |
| | | 100.0% |

| | | |
|---|---|---|
| 6. | X-100 (57%) | 53.0 (30.2) |
| | Staley APG 91-3 (57%) | 47.0 (26.8) |
| | | 100.0% |

| | | |
|---|---|---|
| 7. | X-100 (57.3%) | 71.9 (41.2) |
| | Spray dried Staley 23-3 (100%) | 20.6 |
| | water | 7.5 |
| | | 100.0% |

| | | |
|---|---|---|
| 8. | X-100 (72%) | 57.2 (41.2) |
| | Staley 23-1 (53%) | 38.9 (20.6) |
| | water | 3.9 |
| | | 10.0 g |

| | | |
|---|---|---|
| 9. | X-100 (72%) | 57.2 (41.2) |
| | Staley APG 23-3 (46%) | 42.8 (19.7) |
| | | 100.0% |

| | | |
|---|---|---|
| 10. | X-100 (72%) | 57.2 (41.2) |
| | Staley APG 91-1 (51%) | 40.4 (20.6) |
| | water | 2.4 |
| | | 100.0% |

| | | |
|---|---|---|
| 11. | X-100 (72%) | 57.2 (41.2) |
| | Staley 91-3 (57%) | 36.1 (20.6) |
| | | 6.7 |
| | | 100.0% |

| | | |
|---|---|---|
| 12. | X-100 (57%) | 71.9 (41.2) |
| | AL-2042 (100%) | 20.6 |
| | water | 7.5 |
| | | 100.0% |

| | | |
|---|---|---|
| 13. | X-100 (57%) | 54.3 (31.2) |
| | AL-2042 (100%) | 31.2 |
| | water | 14.5 |
| | | 100.0% |
| 14. | X-100 (57%) | 66.4 (38.2) |
| | Emcol D-7533 (Witco) | 19.1 |
| | water | 14.5 |
| | | 100.0% |
| 15. | X-100 (57%) | 54.3 (31.2) |
| | Emcol D-7533 (Witco) | 31.2 |
| | water | 14.5 |
| | | 100.0% |
| 16. | X-100 (57%) | 54.3 (31.2) |
| | AL-2041 | 31.2 |
| | water | 14.5 |
| | | 100.0% |
| 17. | X-100 (57%) | 63.2 (36.3) |
| | AL-2042 | 27.3 |
| | water | 9.5 |
| | | 100.0% |
| 18. | X-100 (57%) | 71.9 (41.2) |
| | AL-1685 | 20.6 |
| | water | 7.5 |
| | | 100.0% |
| 19. | X-100 (57%) | 71.9 (41.2) |
| | Staley APG 91-3 | 20.6 |
| | water | 7.5 |
| | | 100.0% |
| 20. | X-100 (57%) | 71.9 (41.2) |
| | AL-2041 | 20.6 |
| | water | 7.5 |
| | | 100.0% |
| 21. | X-100 (57%) | 71.9 (41.2) |
| | Emcol D-7533 | 20.6 |
| | water | 7.5 |
| | | 100.0% |

| | | |
|---|---|---|
| 22. | X-100 (57%) | 71.9 (41.2) |
| | Emcol D-7533 | 20.6 |
| | water | 7.5 |
| | | 100.0% |
| 23. | X-100 (57.5%) | 71.7 (41.2) |
| | APG 23-3 | 20.6 |
| | water | 7.7 |
| | | 100.0% |
| 24. | X-100 (57%) | 71.9 |
| | AL-1685 (ICI) | 20.6 |
| | water | 7.5 |
| | | 100.0% |
| 25. | X-100 (57.5%) | 71.7 (41.2) |
| | Staley APG 91-1 | 20.6 |
| | water | 7.7 |
| | | 100.0% |
| 26. | X-100 (57.5%) | 71.7 (41.2) |
| | APG 91-3 | 20.6 |
| | water | 7.7 |
| | | 100.0% |
| 27. | X-100 (57.5%) | 71.7 (41.2) |
| | Staley APG 23-1 | 20.6 |
| | water | 7.7 |
| | | 100.0% |

* X-100 = the trimethylsulfonium salt of N-phosphonomethylglycine in aqueous solution

** a.i. refers to active ingredient

In addition to the PMCM compound and the surfactant, the composition can also include other conventional adjuvants such as heat stabilizers, ultraviolet absorbers, dispersants, and other agriculturally acceptable materials. Representative heat stabilizers include phenylenediamines, phenazine, butylated hydroxy toluene. Representative ultraviolet absorbers include Tinuvin 770, Tinuvin P, and dinitroanilines.

The ratio of PMCM compound to surfactant can vary over a wide range. Since it is known that the choice of a particular surfactant can affect the phytoactivity of the PMCM compounds used in accordance with this invention, the desired activity of the liquid composition should be considered when selecting a particular surfactant. As much surfactant as desired may be employed so long as the products dissolve totally or disperse readily in the diluent prior to application. For cost considerations, a minimum of surfactant should be used which still enables the objects of the invention to be obtained. The ratio of PMCM compound to surfactants by weight, is typically from about 10:1 to about 1:10. The preferred ratio is from about 4:1 to about 1:2. The most preferred ratio is from about 2:1 to about 1:1.

The compositions of this invention can be prepared in any suitable manner. A preferred process, however, comprises first preparing a mixture containing the PMCM compound and the dispersing agent. In preferred embodiments, the PMCM compound is dissolved in the agent. In other embodiments the PMCM compound is dispersed therein.

In some embodiments, the mixture is prepared by forming the PMCM compound in situ. For example, in some

embodiments, N-phosphonomethylglycine is reacted with a desired base, in the presence of water, to form an aqueous solution containing the PMCM compound. In preferred embodiments, solutions of isopropylamine N-phosphonomethylglycine can be prepared in this manner.

The dispersing agent for use in accordance with the process of the invention must meet certain requirements. The agent must be capable of dissolving or dispersing a desired PMCM compound at the temperature used to form the initial mixture, without adversely effecting the PMCM compound's phytoactivity. The greater the solubility or ease or dispersability of the PMCM compound in the dispersing agent, the less agent will be required and the subsequent removal of agent will be facilitated.

Preferred dispersing agents include water and polar organic solvents, such as methanol, ethanol, isopropyl alcohol and acetone. Water is most preferred.

The herbicide compositions provided in accordance with this invention are effective when diluted with water and applied to the locus desired by spray or other means. The locus of application can be soil, seeds, seedlings, or the actual plants, as well as fettered fields. Foliar application is preferred. The compositions can be applied by the use of boom and hand sprayers, and can also be applied from airplane sprays because they are effective in very low dosages.

<u>Herbicidal Screening Tests</u>

As previously mentioned, the herein described PMCM compounds are phytotoxic compounds rich are useful and valuable in controlling various plant species. Selected compounds of this invention were tested as herbicides in the following manner.

<u>Post-emergence herbicide test</u>. On the tenth day preceding treatment, seeds of various weed species are planted in loamy sand soil in individual rows using one species per row across the width of a flat. The seeds used were Johnsongrass (<u>Echinochloa</u> <u>crusgalli</u>), annual morningglory (<u>Ipomoea</u> <u>lacunosa</u>), velvetleaf (<u>Abutilon</u> <u>theophrasti</u>), Bermudagrass (<u>Cynodon</u> <u>dactylon</u>), yellow nutsedge (<u>Cyperus</u> <u>esculentus</u>) and purple nutsedge (<u>Cyperus</u> <u>rotundus</u>). Ample seeds are planted to give about 20 to 40 seedlings per row, after emergence, depending upon the size of the plants.

A series of formulations were prepared by combining the trimethylsulfonium salt of N-phosphonomethylglycine (TMP) with various surfactants and water. In formulation No. 1 in the table which follows, the designation "TMP 4-LC (B)" refers to a formulation comprising 73.7 weight percent of an aqueous solution of the trimethylsulfonium salt of N-phosphonomethylglycine (55.9% active ingredient), 20.6 weight percent of a surfactant and 5.7 weight percent of water. In each of the other formulations set forth below, numerical correlation is made between the formulation and the formulations in the table. In the formulations set forth, the active ingredient (TMP) is indicated and adjacent thereto the percentage of active ingredient in the solution is set forth. Also, the surfactant is indicated as having a specific percent purity and this is set forth adjacent to the chemical name of the surfactant.

In the test procedure, each individual formulation was dissolved in water and various aliquots of water were used to dilute the concentration of the formulation so as to achieve the desired application rate.

After the desired dilution was obtained, a solution was then sprayed on a seeded flat on a linear spray table calibrated to deliver 80 gallons per acre (748 liters per hectare).

After treatment, the flats are placed in the greenhouse at a temperature of 70 to 80°F and watered by sprinkling. Two weeks after treatment, the degree of injury or control is determined by comparison with untreated check plants of the same age. The injury rating from 0 to 100% is recorded for each species as percent control with 0% representing no injury and 100% representing complete control.

The results of the tests are shown in the following Tables.

TABLE 1

| Formulation | Formula (a.i.) | lb/A | Johnsongrass Rep 1 | Johnsongrass Rep 2 | Bermudagrass Rep 1 | Bermudagrass Rep 2 | Purple Nutsedge Rep 1 | Purple Nutsedge Rep 2 |
|---|---|---|---|---|---|---|---|---|
| 1. TMP 57.5% | 71.7 (41.2) | 1/4 | 85 | 95 | 40 | 50 | - | - |
| 4LC "B" (MP-5812) | 20.6 (20.6) | 1/2 | 100 | 100 | 95 | 90 | 30 | 20 |
| water | 7.7 | 1 | - | - | - | - | 90 | 90 |
| | 100.0% | | | | | | | |
| 2. TMP 72% | 57.2 (41.2) | 1/4 | 90 | 80 | 20 | 30 | - | - |
| APG 23-1 53% | 38.9 (20.6) | 1/2 | 100 | 100 | 90 | 85 | 20 | 20 |
| water | 3.9 | 1 | - | - | - | - | 90 | 70 |
| | 100.0% | | | | | | | |
| 3. TMP 72% | 57.2 (41.2) | 1/4 | 90 | 70 | 20 | 20 | - | - |
| APG 23-3 46% | 42.8 (19.7) | 1/2 | 100 | 100 | 85 | 90 | 10 | 20 |
| water | 0.0 | 1 | - | - | - | - | 85 | 70 |
| | 100.0% | | | | | | | |
| 4. TMP 72% | 57.2 (41.2) | 1/4 | 80 | 80 | 20 | 30 | - | - |
| APG 91-1 51% | 40.4 (20.6) | 1/2 | 100 | 100 | 90 | 85 | 20 | 20 |
| water | 2.4 | 1 | - | - | - | - | 80 | 70 |
| | 100.0% | | | | | | | |
| 5. TMP 72% | 57.2 (41.2) | 1/4 | 90 | 95 | 30 | 40 | - | - |
| APG 91-3 57% | 36.1 (20.6) | 1/2 | 100 | 100 | 90 | 85 | 20 | 20 |
| water | 6.7 | 1 | - | - | - | - | 90 | 80 |
| | 100.0% | | | | | | | |

TABLE 1

| Formulation | Formula (a.i.) | lb/A | Johnsongrass Rep 1 | Johnsongrass Rep 2 | Bermudagrass Rep 1 | Bermudagrass Rep 2 | Purple Nutsedge Rep 1 | Purple Nutsedge Rep 2 |
|---|---|---|---|---|---|---|---|---|
| 6. TMP 57.5% | 54.3 (31.2) | 1/4 | 85 | 95 | 40 | 40 | - | - |
| APG 91-3 100% | 31.2 | 1/2 | 100 | 100 | 90 | 93 | 20 | 20 |
| water | 14.5 | 1 | - | - | - | - | 90 | 90 |
| | 100.0% | | | | | | | |
| 7. TMP 57.5% | 54.3 (31.2) | 1/4 | 80 | 90 | 10 | 0 | - | - |
| EMCOL D-7533 100% | 31.2 (31.2) | 1/2 | 100 | 100 | 60 | 70 | 10 | 20 |
| water | 14.5 | 1 | - | - | - | - | 80 | 70 |
| | 100.0% | | | | | | | |
| 8. TMP 57.5% | 63.2 (36.3) | 1/4 | 70 | 80 | 10 | 10 | - | - |
| AL-2041 | 27.3 (27.3) | 1/2 | 98 | 100 | 90 | 80 | 30 | 20 |
| water | 9.5 | 1 | - | - | - | - | 70 | 70 |
| | 100.0% | | | | | | | |
| 9. TMP 57.5% | 63.2 (36.3) | 1/4 | 70 | 90 | 10 | 10 | - | - |
| AL-2042 100% | 27.3 (27.3) | 1/2 | 100 | 100 | 85 | 80 | 30 | 30 |
| water | 9.5 | 1 | - | - | - | - | 70 | 80 |
| | 100.0% | | | | | | | |
| 10. TMP 57.5% | 63.2 (36.3) | 1/4 | 70 | 80 | 10 | 20 | - | - |
| APG 91-3 100% | 27.3 (27.3) | 1/2 | 100 | 100 | 95 | 90 | 30 | 30 |
| water | 9.5 | 1 | - | - | - | - | 70 | 90 |
| | 100.0% | | | | | | | |
| 11. TMP 57.5% | 63.2 (36.3) | 1/4 | 70 | 60 | 0 | 0 | - | - |
| EMCOL D-7533 100% | 27.3 (27.3) | 1/2 | 100 | 90 | 60 | 60 | 0 | 0 |
| water | 9.5 | 1 | - | - | - | - | 60 | 50 |
| | 100.0% | | | | | | | |
| CHECK | | 0 | 0 | 0 | 0 | 0 | 0 | 0 |

TABLE 2

| Formulation | Formula (a.i.) | lb/A | Johnsongrass Rep 1 | Johnsongrass Rep 2 | Bermudagrass Rep 1 | Bermudagrass Rep 2 | Purple Nutsedge Rep 1 | Purple Nutsedge Rep 2 |
|---|---|---|---|---|---|---|---|---|
| 1. TMP 57.5% | 71.7 (41.2) | 1/4 | 100 | 100 | 40 | 50 | - | - |
| 4LC "B" (MP-5812) | 20.6 (20.6) | 1/2 | 100 | 100 | 95 | 95 | 30 | 40 |
| water | 7.7 | 1 | - | - | - | - | 85 | 95 |
| | 100.0% | | | | | | | |
| 2. TMP 57.3% | 71.9 (41.2) | 1/4 | 85 | 95 | 20 | 30 | - | - |
| AL 1685 100% | 20.6 (20.6) | 1/2 | 100 | 100 | 80 | 90 | 30 | 40 |
| water | 7.5 | 1 | - | - | - | - | 80 | 70 |
| | 100.0% | | | | | | | |
| 3. TMP 57.3% | 71.9 (41.2) | 1/4 | 85 | 95 | 20 | 20 | - | - |
| AL-2041 100% | 20.6 (20.6) | 1/2 | 100 | 100 | 80 | 90 | 30 | 30 |
| water | 7.5 | 1 | - | - | - | - | 85 | 85 |
| | 100.0% | | | | | | | |
| 4. TMP 57.3% | 71.9 (41.2) | 1/4 | 90 | 90 | 20 | 20 | - | - |
| AL-2042 100% | 20.6 (20.6) | 1/2 | 90 | 100 | 70 | 90 | 30 | 20 |
| water | 7.5 | 1 | - | - | - | - | 70 | 70 |
| | 100.0% | | | | | | | |
| 5. TMP 57.3% | 71.9 (41.2) | 1/4 | 70 | 70 | 30 | 30 | - | - |
| APG 91-3 100% | 20.6 (20.6) | 1/2 | 100 | 95 | 90 | 90 | 20 | 10 |
| water | 7.5 | 1 | - | - | - | - | 85 | 90 |
| | 100.0% | | | | | | | |
| 6. TMP 57.5% | 54.3 (31.2) | 1/4 | 95 | 90 | 20 | 30 | - | - |
| AL-2041 100% | 31.2 (31.2) | 1/2 | 100 | 100 | 80 | 90 | 20 | 20 |
| water | 14.5 | 1 | - | - | - | - | 70 | 90 |
| | 100.0% | | | | | | | |
| 7. TMP 57.5% | 54.3 (31.2) | 1/4 | 90 | 90 | 20 | 30 | - | - |
| AL-2042 100% | 31.2 (31.2) | 1/2 | 100 | 100 | 90 | 90 | 20 | 20 |
| water | 14.5 | 1 | - | - | - | - | 70 | 85 |
| | 100.0% | | | | | | | |
| 8. TMP 57.3% | 71.9 (41.2) | | | | | | | |
| APG 91-3 100% | 20.6 | | | | | | | |
| water | 7.5 | | | | | | | |
| | 100.0% | | | | | | | |

TABLE 2
(continued)

| Formulation | Formula (a.i.) | lb/A | Johnsongrass Rep 1 | Johnsongrass Rep 2 | Bermudagrass Rep 1 | Bermudagrass Rep 2 | Purple Nutsedge Rep 1 | Purple Nutsedge Rep 2 |
|---|---|---|---|---|---|---|---|---|
| 9. TMP 57.3% | 71.9 (41.2) | 1/4 | 70 | 60 | 40 | 40 | - | - |
| AL-1984 100% | 20.6 | 1/2 | 98 | 95 | 95 | 90 | 30 | 40 |
| water | 7.5 | 1 | - | - | - | - | 70 | 90 |
| | 100.0% | | | | | | | |
| 10. TMP 57.3% | 71.9 (41.2) | 1/4 | 50 | 50 | 20 | 30 | - | - |
| AL-1685 100% | 20.6 | 1/2 | 90 | 95 | 90 | 90 | 30 | 20 |
| water | 7.5 | 1 | - | - | - | - | 80 | 90 |
| | 100.0% | | | | | | | |
| 11. TMP 57.3% | 71.9 (41.2) | 1/4 | 70 | 60 | 30 | 30 | - | - |
| AL-2042 100% | 20.6 | 1/2 | 90 | 100 | 90 | 90 | 30 | 30 |
| water | 7.5 | 1 | - | - | - | - | 90 | 70 |
| | 100.0% | | | | | | | |
| 12. TMP 57.3% | 71.9 (41.2) | 1/4 | 50 | 50 | 10 | 10 | - | - |
| AL-2042 100% | 20.6 | 1/2 | 80 | 100 | 85 | 95 | 20 | 30 |
| water | 7.5 | 1 | - | - | - | - | 70 | 90 |
| | 100.0% | | | | | | | |
| CHECK | | 0 | 0 | 0 | 0 | 0 | | |

TABLE 3

| Formulation | | Formula | Rate (lb/A) | Velvetleaf | Yellow Nutsedge | Annual Morningglory |
|---|---|---|---|---|---|---|
| 1. | TMP 57.3% | 71.9 (41.2) | 1/2 | 40 | 40 | 40 |
| | WITCAMIDE 272 100% | 20.6 | 1 | 70 | 70 | 100 |
| | water | 7.5 | 2 | 95 | 90 | 100 |
| | | 100.0% | | | | |
| 2. | TMP 57.3% | 71.9 (41.2) | 1/2 | 30 | 30 | 30 |
| | EMCOL D-7513 100% | 20.6 | 1 | 60 | 60 | 70 |
| | water | 7.5 | 2 | 95 | 90 | 95 |
| | | 100.0% | | | | |
| 3. | TMP 57.3% | 71.9 (41.2) | 1/2 | 40 | 40 | 40 |
| | EMCOL D-7533 100% | 20.6 | 1 | 70 | 70 | 100 |
| | water | 7.5 | 2 | 98 | 95 | 100 |
| | | 100.0% | | | | |
| 4. | TMP 57.5% | 71.7 (41.2) | 1/2 | 40 | 50 | 30 |
| | APG 23-3 100% | 20.6 ( 9.5) | 1 | 60 | 90 | 50 |
| | water | 7.7 | 12 | 90 | 100 | 80 |
| | | 100.0% | | | | |
| 5. | TMP 57.5% | 71.7 (41.2) | 1/2 | 30 | 40 | 30 |
| | APG 91-1 51% | 20.6 (10.5) | 1 | 60 | 70 | 50 |
| | water | 7.7 | 2 | 90 | 100 | 80 |
| | | 100.0% | | | | |
| 6. | TMP 57.5% | 71.7 (41.2) | 1/2 | 40 | 50 | 30 |
| | APG 91-3 57% | 20.6 (11.7) | 1 | 80 | 90 | 50 |
| | water | 7.7 | 2 | 100 | 100 | 80 |
| | | 100.0% | | | | |
| | CHECK | | 0 | 0 | 0 | 0 |
| | CHECK | | 0 | 0 | 0 | 0 |

The amount of the present composition which constitutes a herbicidally effective amount depends upon the nature of the seeds or plants to be controlled. The rate of application varies from about 0.01 to about 50 pounds per acre (a.i.), preferably from about 0.1 to about 25 pounds per acre (a.i.), with the actual amount depending on the overall cost and the desire results. It will be readily apparent to one skilled in the art that compositions exhibiting local herbicidal activity will require a higher dosage than more active compounds for the same degree of control.

As used herein, the term "herbicide" refers to a compound which controls or modifies plant growth, e.g., killing,

retarding, defoliating, desiccating, regulating, stunting, tillering and dwarfing. "Plant" refers to all physical parts, including seeds, seedlings, saplings, roots, tubers, stems, stalks, foliage and fruits. "Plant growth" is meant to include all phases of development from seed germination to natural or induces cessation of life.

## Claims

1. A liquid herbicidal concentrate dilutable by water or water-containing liquid before application in the field characterised in that it comprises:

   (a) an herbicidally effective N-phosphonomethyl-N-carboxymethyl compound;

   (b) one or more liquid nonionic surfactants; which are selected from alkyl polyglycosides;

   (c) a solvent for the N-phosphonomethyl-N-carboxymethyl compound; and

   (d) one or more inert adjuvants.

2. A concentrate as claimed in claim 1 wherein the weight percentage of the N-phosphonomethyl-N-carboxymethyl compound (a) is from 10 to 70% by weight.

3. A concentrate as claimed in claim 1 or claim 2 wherein the weight percentage of the liquid nonionic surfactant (b) is from 5 to 40% by weight.

4. A concentrate as claimed in any of claims 1 to 3 wherein (a) is the trimethylsulfonium salt of N-phosphonomethylglycine.

5. A concentrate as claimed in any of claims 1 to 4 wherein (d) comprises one or more of an anti-foaming agent, a heat stabilizing agent and an ultraviolet absorber.

6. A concentrate as claimed in any of claims 1 to 5 wherein (a) is present in an amount from about 10 to about 50 weight percent, (b) is present in an amount from about 15 to about 30%, (c) is present in an amount from about 20 to about 50% and (d) is present in an amount ranging from about 1 to about 5%.

7. A method for controlling undesirable vegetation characterised in that it comprises applying to a locus where the said control is required an herbicidally effective amount of a concentrate as claimed in any of claims 1 to 6.

## Patentansprüche

1. Flüssiges Herbizid-Konzentrat, das durch Wasser oder eine Wasser-enthaltende Flüssigkeit vor der Applikation auf dem Feld verdünnbar ist, dadurch **gekennzeichnet,** daß es umfaßt:

   (a) eine herbizid wirksame N-Phosphonomethyl-N-carboxymethyl-Verbindung;

   (b) ein oder mehrere flüssige nicht-ionische Tenside, die aus Alkylpolyglykosiden ausgewählt werden;

   (c) ein Lösungsmittel für die N-Phosphonomethyl-N-carboxymethyl-Verbindung und

   (d) einen oder mehrere inerte Hilfsstoffe.

2. Konzentrat gemäß Anspruch 1, bei dem der prozentuale Gewichtsanteil der N-Phosphonomethyl-N-carboxvmethyl-Verbindung (a) 10 bis 70 Gew.-% beträgt.

3. Konzentrat gemäß Anspruch 1 oder Anspruch 2, bei dem der prozentuale Gewichtsanteil des flüssigen nicht-ionischen Tensids (b) 5 bis 40 Gew.-% beträgt.

4. Konzentrat gemäß einem der Ansprüche 1 bis 3, worin (a) das Trimethylsulfoniumsalz von N-Phosphonomethylglycin ist.

**5.** Konzentrat gemäß einem der Ansprüche 1 bis 4, worin (d) ein oder mehrere schaumverhindernde Mittel, Wärmestabilisierungsmittel und Ultraviolettabsorbenzien umfaßt.

**6.** Konzentrat gemäß einem der Ansprüche 1 bis 5, worin (a) in einer Menge von etwa 10 bis etwa 50 Gew.-% vorliegt, (b) in einer Menge von etwa 15 bis etwa 30 % vorliegt, (c) in einer Menge von etwa 20 bis etwa 50 % vorliegt und (d) in einer Menge im Bereich von etwa 1 bis etwa 5 % vorliegt.

**7.** Verfahren zur Kontrolle unerwünschter Vegetation, dadurch **gekennzeichnet,** daß es das Aufbringen einer herbizid wirksamen Menge eines Konzentrats gemäß einem der Ansprüche 1 bis 6 auf die Stelle, wo diese Kontrolle gewünscht wird, umfaßt.

**Revendications**

**1.** Concentré herbicide liquide pouvant être dilué par l'eau ou par un liquide contenant de l'eau avant son application sur le terrain, caractérisé en ce qu'il comprend :

(a) un composé N-phosphonométhyl-N-carboxyméthylique à effet herbicide ;
(b) un ou plusieurs agents tensio-actifs liquides non ioniques, qui sont choisis parmi des alkyle polyglycosides ;
(c) un solvant pour le composé N-phosphonométhyl-N-carboxyméthylique ; et
(d) un ou plusieurs adjuvants inertes.

**2.** Concentré suivant la revendication 1, dans lequel le pourcentage en poids du composé N-phosphonométhyl-N-carboxyméthylique (a) va de 10 à 70 % en poids.

**3.** Concentré suivant la revendication 1 ou la revendication 2, dans lequel le pourcentage en poids de l'agent tensioactif liquide non ionique (b) va de 5 à 40 % en poids.

**4.** Concentré suivant l'une quelconque des revendications 1 à 3, dans lequel (a) est le sel de triméthylsulfonium de la N-phosphonométhylglycine.

**5.** Concentré suivant l'une quelconque des revendications 1 à 4, dans lequel (d) comprend un ou plusieurs agents anti-moussants ; un agent de stabilisation à la chaleur et un agent absorbant les rayons ultraviolets.

**6.** Concentré suivant l'une quelconque des revendications 1 à 5, dans lequel (a) est présent en une quantité d'environ 10 à environ 50 pour cent en poids, (b) est présent en une quantité d'environ 15 à environ 30 %, (c) est présent en une quantité d'environ 20 à environ 50 % et (d) est présent en une quantité allant d'environ 1 à environ 5 %.

**7.** Procédé pour combattre une végétation indésirable, caractérisé en ce qu'il comprend l'application en un lieu où cette végétation doit être combattue, d'une quantité à effet herbicide d'un concentré suivant l'une quelconque des revendications 1 à 6.